# EUROPEAN PATENT SPECIFICATION

(11) **EP 1 625 650 B1**
(45) Date of publication and mention of the grant of the patent: **08.04.2009**
(21) Application number: 03727975.9
(22) Date of filing: 22.05.2003
(51) Int. Cl.: H02K 5/26, H02K 15/00

(54) **ELECTRIC MOTOR FOR MOUNTING IN A MOTOR SEAT AND METHOD FOR MOUNTING AND POSITIONING IT**
ELEKTROMOTOR ZUR MONTAGE IN EINEM MOTORGESTELL UND VERFAHREN ZUR MONTAGE UND POSITIONIERUNG DESSELBEN
MOTEUR ELECTRIQUE: METHODE DE MONTAGE ET DE POSITIONNEMENT DANS UN SIEGE

(43) Date of publication of application: 15.02.2006
(73) Proprietor: Giordano Riello International Group S.p.A., 37040 Bevilacqua VR (IT)
(72) Inventor: RIELLO, Valerio, Giordano, I-37040 Bevilacqua VR (IT)
(74) Representative: Perani, Aurelio
(86) International application number: PCT/IT2003/000313
(87) International publication number: WO 2004/105216

(56) References cited:
- EP-A- 1 119 089
- DE-U- 8 808 854
- US-A- 4 033 531
- US-A- 4 076 196
- US-A- 5 488 259
- PATENT ABSTRACTS OF JAPAN vol. 1999, no. 04, 30 April 1999 (1999-04-30) & JP 11 013698 A (MITSUBISHI ELECTRIC CORP), 19 January 1999 (1999-01-19)

## Description

This invention relates to an electric motor which can be mounted and positioned in a motor seat according to the preamble of claim 1 (cf. US-A-5 488 259).

Another aspect of this invention relates to a method for mounting and positioning an electric motor in a motor seat as defined in independent claim 3.

More particularly, this invention relates to a method for mounting and positioning an electric motor in automated lines.

Electric motors which have to be mounted in a motor seat and methods for mounting and positioning an electric motor in which an operator or anthropomorphic robot mounts and correctly positions the electric motor in a motor seat designed for such purpose are known. Documents US-A-5 488 259 and DE-U-8 808 854 disclose such motor mounts. In the case in which the mounting and positioning operation is carried out by a human operator, the latter can easily check that the electric motor is correctly positioned.

On the contrary, where such operations have to be carried out within an automated line a plurality of reference points have to be provided so that the spatial position of the robot with respect to the motor and/or vice versa can be identified. In fact, when the robot picks up the electric motor from the pallet or from the electric motor storage station, it is "blind" with respect to the present position of the motor.

In order to enable the anthropomorphic robot to recognise the position of the motor in space it is necessary to provide a number of position sensors, encoders, photocells and the like. In this way a series of rotational/translational operations which the robot must perform in order to mount and correctly position the electric motor in the appropriate seat can be defined.

However, this solution has the disadvantages that it requires a considerable number of sensors, to the detriment of the automatic controlling system, which becomes complex and unstable.

The need to have a method which makes it possible to reduce the use of position sensors is therefore greatly felt.

The technical problem underlying this invention is that of providing an electric motor which has to be mounted on a motor seat having structural and functional characteristics such that it can be mounted and positioned so as to satisfy the abovementioned requirement, and a method for mounting the motor.

This problem is resolved by an electric motor capable of being mounted in a motor seat according to claim 1 and by a method of mounting and positioning an electric motor in a motor seat according to claims 3 and 4.

Other advantages and characteristics of the present invention will become clear from the following detailed description which is given with reference to the appended drawings which are provided purely by way of non-limiting example and in which:

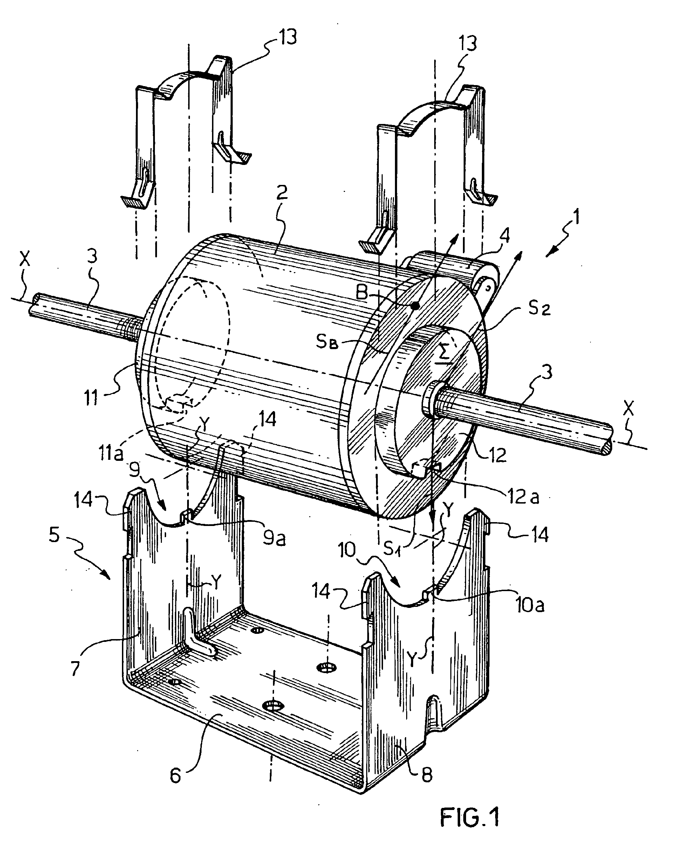

- Figure 1 shows a perspective view of an electric motor which can be mounted in a motor seat according to this invention,
- Figure 2 shows one application of the method according to this invention,
- Figure 3 shows a detail in Figure 2,
- Figures 4-6 show diagrammatical side views of the motor in Figure 3 in the direction indicated by arrow III in Figure 3 during different stages of the method according to the invention.

With reference to the abovementioned figures, 1 generically indicates an electric motor which is to be mounted and positioned in a motor seat 5 using the method according to this invention.

Like a normal electric motor of the conventional type, electric motor 1 comprises a loadbearing supporting structure 2 for a stator member (not shown in the figure) and a drive shaft 3 to which a rotor (not shown in the figure) is connected.

The example provided below relates to an electric motor for fan/convector equipment designed to drive a pair of fans.

In order to drive a pair of fans drive shaft 3 projects from both head ends of electric motor 1 along a longitudinal axis of rotation (X-X).

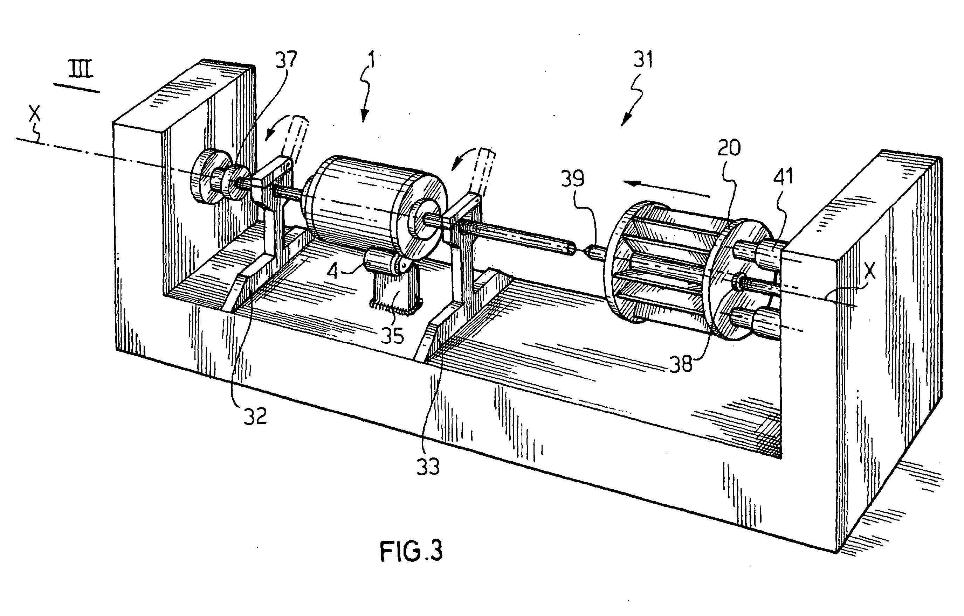

In the description which follows reference will be made to a fan 20 (Figure 3), and the description also applies to the other fan not shown in the figures.

Electric motor 1 has an eccentric centre of gravity B with respect to drive shaft 3.

According to one aspect of the invention, the eccentricity of electric motor 1 is due to the presence of angular reference means 4 projecting from electric motor 1.

According to a preferred embodiment, angular reference means 4 take the form of an electrical capacitor.

Electrical capacitor 4 has the function of a starter in the stage of starting up electric motor 1 and is typically mounted on the outer part of loadbearing structure 2 of electric motor 1

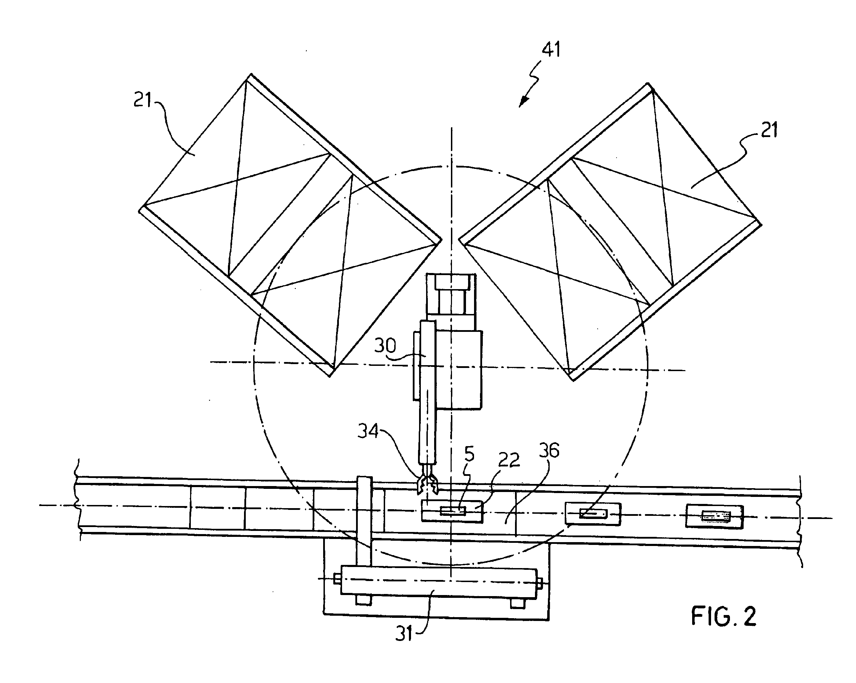

Electric motor 1 is designed to be mounted and positioned in motor seat 5, whose function is to support electric motor 1 when it is in operation. In particular, in fan/convectors, motor seat 5 is connected to a trough 22 (Figure 2) for the collection of condensation in a manner which is in itself known and which is not therefore further described.

According to a preferred embodiment, motor seat 5 takes the form of a sheet metal structure folded into a U having a base 6 and a pair of side walls 7 and 8. Side walls 7 and 8 have corresponding recesses 9 and 10 to receive respective portions 11 and 12 of motor 1.

According to the method according to the invention, electric motor 1 is provided with positioning means 11a and 12a provided in corresponding portions 11 and 12 of electric motor 1, and motor seat 5 is provided with matching corresponding positioning means 9a and 10a. Positioning means 11a and 12a of electric motor 1 are designed to provide an interlocking coupling with matching positioning means 9a and 10a of motor seat 5.

As will be clear from the description provided below, positioning means 9a, 10a, 11a and 12a are used not only for correct positioning of electric motor 1 in motor seat 5 but also for centering electric motor 1 with respect to motor seat 5.

According to a preferred embodiment, positioning means 11a and 12a of electric motor 1 each take the form of a housing of a female type made in portions 11 and 12 of motor 1 respectively.

According to a preferred embodiment, portions 11 and 12 of electric motor 1 correspond to the shock absorbers of electric motor 1 located at each of the head ends of drive shaft 3 of motor 1.

Positioning means 9a and 10a of motor seat 5 each take the form of an appendage of the male type made respectively in recesses 9 and 10 of side walls 7 and 8 of motor seat 5 designed to receive electric motor 1.

Positioning means 9a and 10a of motor seat 5, that is the appendages of the male type 9a and 10a, are preferably made in the lower portion of recesses 9 and 10.

Alternatively it is possible to invert the positions of positioning means 9a, 10a, 11a and 12a without thereby invalidating application of the method according to this invention.

For simplicity of description, the description provided below relates to positioning means 10a and 12a located on one side of the structure comprising electric motor 1 and motor seat 5, the description for positioning means 9a and 11a located on the opposite side being equivalent.

Positioning means 12a of electric motor 1 are angularly offset by a predetermined angle ω measured between the projection onto the same plane Σ, normal to the axis of rotation X-X, of two straight lines S₁ and S_{B} which leave axis of rotation X-X perpendicularly and pass through positioning means 12a and centre of gravity B respectively.

Advantageously, predetermined angle ω measured between straight line S₁ and straight line S_{B} corresponds to the smaller angle measured between positioning means 12a and centre of gravity B, the angle 360-ω also being present.

Furthermore, positioning means 12a of electric motor 1 and angular reference means 4 are angularly offset by a predetermined offset angle α measured between the projections on the same plane normal to the axis of rotation X-X, for example plane Σ of straight line S₁ and straight line S₂. Straight line S₂ leaves axis of rotation X-X perpendicularly and passes through angular reference means 4.

Advantageously, the predetermined offset angle α measured between straight line S₁ and straight line S₂ corresponds to the lesser angle measured between positioning means 12a and capacitor 4, the angle 360-α also being present.

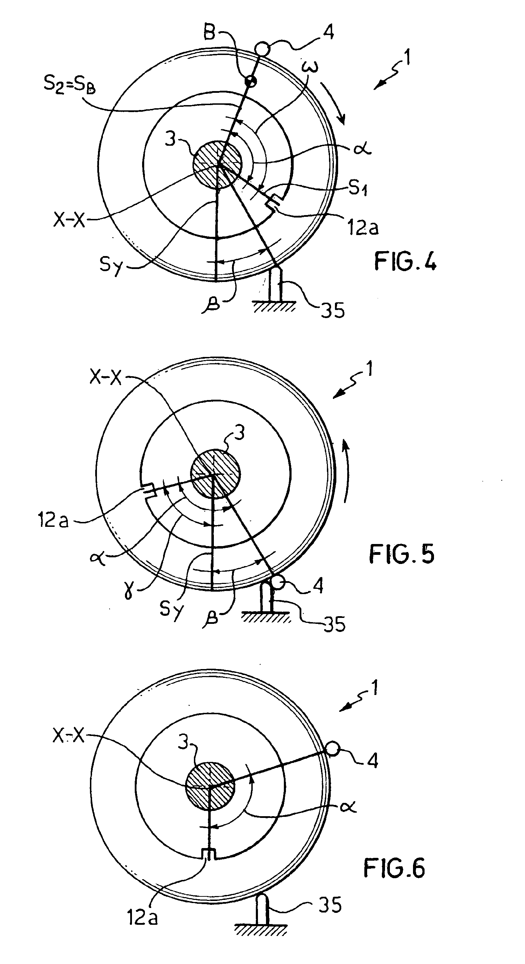

As illustrated in Figure 4, in this case straight lines S₂ and S_{B} coincide in that the angular position of centre of gravity B is determined by capacitor 4. Obviously angles α and ω may differ from each other.

For application of the method according to this invention it is therefore assumed that both angle ω and angle α are known at the outset. In fact both the position in which electrical capacitor 4 is fixed onto loadbearing structure 2 of electric motor 1 and the position in which female housing 12a is made, that is the position of centre of gravity B, are known in advance or can at least be measured in advance.

An embodiment of the method according to this invention will now be described with particular reference to the case of an automated line in which a robot 30 has to mount and correctly position electric motor 1 in motor seat 5.

In particular it is assumed that robot 30, electric motor 1 and motor seat 5 are present at a work station 41 (Figure 2) of an automated production line (not shown in the figures). Work station 41, for assembly of the motor-fan-motor seat, has an operating unit 31 in which a series of operations which enable robot 30 to know at least one position of motor 1 in space, for example the angular position of electric motor 1 (with respect to axis of rotation X-X), are performed.

In the case of an automated production line for fan convectors, electric motor 1 has to be assembled to fan 20. This operation is preferably carried out within operating unit 31. For this purpose it is necessary for the robot also to know another position of electric motor 1, that is a linear position, as will be more particularly described below with reference to the stage of assembling fan 20 with electric motor 1.

Work station 31 comprises support means 32 and 33 capable of supporting electric motor 1 by drive shaft 3 and angular stop means 35 whose function will become clearer in the description which follows.

According to a preferred embodiment, electric motor 1 and motor seat 5 are housed on a pallet 36 designed to transport the workpieces to the various operating units along the automated line. Advantageously, motor seat 5 housed on pallet 36 has already previously been assembled with collection trough 22.

Alternatively, electric motor 1, motor seat 5 and collection trough 22 are located close to operating unit 31, for example in a material storage area 21.

Robot 30 picks up electric motor 1 through grasping means 34 and sets it down on support means 32 and 33.

According to a preferred embodiment, support means 32 and 33 take the form of a pair of supports having a terminal portion of a "U" or "V" shape designed to receive drive shaft 3 of electric motor 1.

Electric motor 1 is thus supported by supports 32 and 33 through drive shaft 3. This method of supporting electric motor 1 makes it possible for electric motor 1, or supporting structure 2, to rotate freely about drive shaft 3, or about longitudinal axis of rotation X-X, by gravity.

Through the effect of the force of gravity and because of the presence of eccentric centre of gravity B, electric motor 1 tends to position itself so that centre of gravity B is at the point of minimum potential energy, that is below drive shaft 3 in a vertical axis Y-Y passing through axis of rotation X-X.

Grasping means 34 are preferably but not necessarily a pair of tongs which each pick up drive shaft 3 on opposite sides with respect to loadbearing structure 2 of electric motor 1. The free rotation of electric motor 1 about drive shaft 3 is therefore assured by suitably shaped supports 32 and 33.

According to a subsequent stage of the method according to this invention, electric motor 1 is rotated, in a predetermined direction of rotation, about drive shaft 3 through compensating angle γ which depends on lesser angle ω to bring positioning means 12a of electric motor 1 into an angular position such as to permit it to engage matching positioning means 10a when electric motor 1 is housed on motor seat 5.

Electric motor 1 is rotated about drive shaft 3 by a robot which may be the same robot 30 or another robot intended for this task. In carrying out this rotation it is convenient to seize electric motor 1 through support structure 2 in such a way that a particular rotation of support structure 2 corresponds to an equal rotation of positioning means 12a of motor 1 about drive shaft 3.

Following this rotation, electric motor 1 is ready to be mounted and correctly positioned on motor seat 5.

It should be noted that the use of this embodiment of the method may give rise to a sometimes appreciable error as a result of angle ω being incorrectly determined. In fact, because of friction in the motor and other phenomena of a random type it can happen that angle ω can vary from motor to motor, consequently invalidating the effectiveness of the method according to this invention. In other words, motors which are structurally identical and of the same type, when free to rotate about a rotation shaft 3, may stop in slightly different positions. Because compensating angle γ is a function of angle m, and because electric motor 1 rotates through an angle equal to compensating angle γ, it may happen that positioning means 12a are not located in an angular position such as to enable them to engage the matching positioning means 10a in motor seat 1 without continuously varying compensating angle γ. Angular stop means 35, which take the form, for example, of a beat stop (Figure 3) are used to overcome this disadvantage.

Electric motor 1 is supported by supports 32 and 33 to allow it to rotate by gravity about drive shaft 3. The purpose of this rotation is to bring the angular reference means, that is capacitor 4, to abut against angular stop means 35 located at a predetermined stop angle β with respect to a straight line S_{Y} passing vertically downwards from axis of rotation X-X.

This is particularly advantageous in that stop 35 is in a position which is known to robot 30, as a result of which the angular position of electric motor 1 about axis of rotation X-X also becomes known. This information is necessary for implementing the method according to this invention.

So that free rotation of electric motor 1 about drive shaft 3 brings capacitor 4 to abut against stop 35 (Figure 4), this rotation must take place in a particular direction of rotation, for example, clockwise as illustrated in Figure 4. If free rotation takes place in an anticlockwise direction, for example in the case in which capacitor 4 lies in the left hand half-plane when supported by supports 32 and 33, a barring sensor (not shown in the figures for simplicity) must be provided to detect the incorrect angular position, or the incorrect rotation of electric motor 1, and send this signal to robot 30. On receiving this signal robot 30 will rotate electric motor 1 about rotation shaft 3 until it meets stop 35. During this process an intelligent system of the learning type will keep track of the angular rotation applied to motor 1 so as to use it subsequently whenever the barring sensor detects the same situation.

The statistical frequency of this situation is acceptable for typical production line. In fact, it should be noted that electric motors reach the manufacturing plant housed in a packing or shell of thermoformed plastics material. This shell is provided with a housing for capacitor 4 located in a known position, for example within a cone of angle 60°. However it may occur that impacts, jolts and similar movements during transport may alter the position of capacitor 4. For this reason it is not possible to use this information as known, but there is an acceptable probability that the capacitor will still be located in the correct half-plane. In this case free rotation will take place as described above, if not the barring sensor will come into play.

Subsequently electric motor 1 is rotated, in a predetermined direction of rotation, about drive shaft 3 through a compensating angle γ depending on offset angle α and stop angle β so as to bring positioning means 12a of electric motor 1 into an angular position such as to permit it to engage matching positioning means 10a when electric motor 1 is housed in motor seat 5.

Figures 4-6 show an embodiment of the method according to this invention, with particular reference to the situation in which angular stop means 35 are present. The dimensions of electric motor 1, capacitor 4, angular stop means 35 and positioning means 12a are neglected in Figures 4-6.

As illustrated in Figure 5, electric motor 1 is rotated anti-clockwise about drive shaft 3 through a compensating angle γ equal to the difference between the offset angle α and stop angle β. Advantageously offset angle α is equal to 120° and stop angle β is equal to 15°.

In a particularly advantageous embodiment offset angle α is equal to 180° so as to optimise robot 30 when rotating electric motor 1 about drive shaft 3.

In the subsequent stage of the method according to this invention electric motor 1 is mounted in motor seat 5 in such a way that an interlocking coupling is produced between positioning means 11a and 12a of electric motor 1 and positioning means 9a and 10a of motor seat 5.

When correctly inserted in motor seat 5 electric motor 1 opposes a rotation imparted for example by robot 30 which attempts to further rotate structure 2 of electric motor 1 about axis of rotation X-X. In this way robot 30 detects a force couple opposing the attempt to rotate electric motor 1 correctly mounted and positioned on motor seat 5. Once a reference value of the couple is exceeded, the interlocking connection between positioning means 9a and 10a of motor seat 5 and positioning means 11a and 12a of electric motor 1 is considered to be good.

Electric motor 1 can be mounted in motor seat 5 in different ways.

According to a preferred embodiment, electric motor 1 is lifted from supports 32 and 33 by robot 30, or by another robot, and is moved laterally in relation to motor seat 5, previously assembled to collection trough 22, housed on pallet 36.

It should be borne in mind that, in order to avoid misalignment between positioning means 12a of motor 1 located in an angular position such as to permit interlocking coupling with corresponding matching positioning means 10a in motor seat 5, it is necessary for lateral movement to take place preventing the rotation of electric motor 1 about drive shaft 3. This operation is carried out in a manner which is in itself known by robot 30.

Finally, electric motor 1 is stably secured to motor seat 5 by applying two harmonic steel springs 13. Springs 13 are taken from a holder by two applicator members which are suitably shaped to the elastic shape of spring 13 which presses springs 13 onto shock absorbers 11 and 12 of electric motor 1. The springs pushed in this way snap engage catches 14 provided in motor seat 5.

If electric motor 1 is used with a fan convector, electric motor 1 has to be assembled to a pair of fans. This operation is preferably carried out before the stage of rotating electric motor 1 through a compensating angle γ.

The method for assembling electric motor 1 with a fan, for example fan 20, onto part of drive shaft 3 is described below, and the method for assembling a fan on the opposite part is obviously equivalent. In particular hub 38 of fan 20 is secured to drive shaft 3 through an interference fit.

Electric motor 1 is located in operating unit 31 supported by supports 32 and 33 with capacitor 4 abutting against angular stop means 35.

Drive shaft 3 is pushed, for example by robot 30, axially in the direction of axis of rotation X-X so as to bring it to abut against axial stop 37. In this way the linear position of electric motor 1 becomes known, in addition to the angular position. This operation is necessary because of the fact that electric motors may have different drive shaft dimensions and it is therefore necessary to know the position up to which fan 20 has to be pressed on drive shaft 3.

Subsequently supports 32 and 33 secure drive shaft 3 axially immobilising the drive shaft along axis of rotation X-X. This operation is carried out for example by tightening means secured to the ends of supports 32 and 33 (Figure 3) and is necessary to prevent damage to the rotor of the electric motor during the subsequent securing stage.

Fan 20 is supported and guided in line with drive shaft 3 by an auxiliary shaft 39 extending along axis of rotation X-X, that is perfectly coaxially with drive shaft 3.

Through two pusher members 41, fan 20 is pushed axially towards the drive shaft in the direction of axis of rotation X-X to secure hub 38 of fan 20 on drive shaft 3 through an interference fit. The pusher members produce, for example, a thrust of 30 Kg in order to ensure correct assembly.

Once motor 1 has been assembled with fan 20, robot 30 then mounts electric motor 1 in motor seat 5.

As will be seen from what has been described, the method for mounting and positioning an electric motor in a motor seat according to this invention makes it possible to satisfy the requirements and overcome the disadvantages mentioned in the introductory part of this description with reference to the known art.

The advantages deriving from use of the method according to this invention lie mainly in the fact that they assist automation of the assembly of electric motor 1 with motor seat 5 according to the invention. In addition to this the absence of additional components which would make the masses in question asymmetrical makes it possible to achieve better dynamic balancing of the motor/fan unit.

## Claims

1. An electric motor (1) with a motor seat (5), said electric motor (1) being designed to be mounted and positioned in said motor seat (5), said electric motor (1) comprising a drive shaft (3) projecting from the two head ends of said motor (1) along a longitudinal axis of rotation (X-X) and two portions (11,12) projecting from said two head ends of said motor (1) along said longitudinal axis of rotation (X-X), said motor seat (5) having two recesses (9,10) intended to receive said two portions (11,12) of the motor (1),
**characterized in that**
- said two portions (11,12) of the motor (1) comprise positioning means (11a, 12a)
- said two recesses (9,10) of the motor seat (5) comprise matching positioning means (9a,10a) designed to provide an interlocking coupling with said positioning means (11a,12a) of the motor (1),
- said motor (1) has an eccentric centre of gravity (B) with respect to the drive shaft (3), and
- said positioning means (11a,12a) of the motor (1) are angularly offset with respect to said eccentric centre of gravity (B) by a predetermined angle (ω) measured between the projection onto one plane (Σ), normal to the axis of rotation (X-X), of two straight lines (S₁, S_{B}) which leave the axis of rotation (X-X) perpendicularly and pass through said positioning means (11a,12a) and said eccentric centre of gravity (B) respectively.

2. An electric motor (1) according to claim 1, comprising angular reference means (4) projecting from the said motor, in which the said positioning means (12a, 11a) of the said motor and the said angular reference means (4) are angularly offset by a predetermined offset angle (α) measured between the projection onto one plane (ω), normal to the axis of rotation (X-X), of two straight lines (S₁, S₂) which leave the axis of rotation (X-X) perpendicularly and pass through the said positioning means (11a, 12a) and the said angular reference means (4) respectively.

3. A method for mounting and positioning an electric motor (1) in a motor seat (5), in which
said electric motor (1) comprises a drive shaft (3) projecting from the two head ends of said motor (1) along a longitudinal axis of rotation (X-X) and two portions (11,12) projecting from said two head ends of said motor (1) along said longitudinal axis of rotation (X-X),
said motor seat (5) has two recesses (9,10) intended to receive said two portions (11,12) of the motor (1),
said two portions (11,12) comprise positioning means (11a, 12a),
said two recesses (9,10) of the motor seat (5) comprise matching positioning means (9a, 10a) designed to provide an interlocking coupling with said positioning means (11a,12a) of the motor (1),
said motor (1) has an eccentric centre of gravity (B) with respect to the drive shaft (3), said method comprising the stages of:
- supporting said motor (1) by said drive shaft (3) to allow the motor (1) to rotate freely about the drive shaft (3) by gravity,
- rotating said motor (1) about said drive shaft (3) through a compensating angle (γ) which depends on the lesser angle (ω) identified between the projections on one plane (Σ) normal to the axis of rotation (X-X), of two straight lines (S₁, S_{B}) which leave the axis of rotation (X-X) perpendicularly and pass through said positioning means (11a, 12a) of the motor (1) and said centre of gravity (B) respectively so as to bring the positioning means (11a, 12a) of the motor (1) into an angular position such as to permit them to be interlockingly connected with the matching positioning means (9a, 10a) when the motor (1) is mounted in said seat (5),
- mounting said motor (1) in said seat (5) so as to bring about said interlocking coupling.

4. A method for mounting and positioning an electric motor (1) in a motor seat (5) according to claim 3, in which said eccentric centre of gravity (B) comprises angular reference means (4) projecting from said motor (1),
- said positioning means (11a, 12a) of said motor (1) and said angular reference means (4) are angularly offset by a predetermined offset angle (α) measured between the projection onto one plane (Σ), normal to the axis of rotation (X-X), of two straight lines (S₁, S₂) which leave the axis of rotation (X-X) perpendicularly and pass through said positioning means (11a, 12a) and said angular reference means (4) respectively,
said method comprising the stages of:
- supporting said motor (1) by said drive shaft (3) to permit the motor (1) to rotate about the drive shaft (3) by gravity, said rotation being designed to bring the angular reference means (4) to abut against angular stop means (35) located at a predetermined stop angle (β) with respect to a straight line (S_{Y}) which runs vertically downwards from the axis of rotation (X-X),
- rotating said motor (1) about said drive shaft (3) through a compensating angle (γ), which depends on said predetermined offset angle (α) and said predetermined stop angle (β), so as to bring the positioning means (11a, 12a) of the motor (1) into an angular position such as to permit interlocking coupling with the matching positioning means (9a, 10a) when the motor (1) is mounted in said seat (5),
- mounting said motor (1) in said seat (5) so as to bring about said interlocking coupling.

5. A method for mounting and positioning an electric motor (1) according to claim 4, in which said angular reference means (4) is an electrical capacitor.

6. A method for mounting and positioning an electric motor (1) according to claims 4 or 5, in which said compensating angle (γ) is equal to said predetermined offset angle (α) less said predetermined reference angle (β).

## Patentansprüche

1. Ein Elektromotor (1) mit einem Motorsitz (5), wobei der Elektromotor (1) derart ausgebildet ist, dass er in den Motorsitz (5) montiert wird, und wobei der Elektromotor (1) eine Antriebswelle (3) umfasst, die aus den beiden Kopfstellen des Motors (1) entlang einer Drehlängsachse (X - X) herausragt, sowie zwei Abschnitte (11, 12), die aus den zwei Kopfstellen des Motors (1) entlang der Drehlängsachse (X - X) herausragen, und wobei der Motorsitz (5) zwei Aussparungen (9, 10) besitzt, um die zwei Abschnitte (11, 12) des Motors (1) aufzunehmen,
**dadurch gekennzeichnet, dass**
- die zwei Abschnitte (11, 12) des Motors (1) Positionierungsmittel (11a, 12a) umfassen,
- die zwei Aussparungen (9, 10) des Motorsitzes (5) anpassende Positionierungsmittel (9a, 10a) umfassen, die derart ausgebildet sind, dass sie eine Verriegelungskupplung mit den Positionierungsmitteln (11a, 12a) des Motors (1) bilden,
- der Motor (1) einen außermittigen Massenmittelpunkt (B) im Verhältnis zur Antriebswelle (3) besitzt, und
- die Positionierungsmittel (11a, 12a) des Motors (1) im Verhältnis zum außermittigen Massenmittelpunkt (B) um einen vorbestimmten Winkel (ω) verschoben sind, der jeweils zwischen dem außermittigen Massenmittelpunkt (B) und einer Projektion von zwei aus der Drehachse (X - X) senkrecht austretenden bzw. die Positionierungsmittel (11a, 12a) durchquerenden Geraden (S₁, S_{B}) auf einer senkrecht zur Drehachse (X - X) liegenden Ebene Σ), gemessen wird.

2. Ein Elektromotor (1) nach Anspruch 1, der Winkelbezugsmittel (4) umfasst, die aus dem Motor herausragen, wobei die Positionierungsmittel (11a, 12a) des Motors (1) und die Winkelbezugsmittel (4) um einen vorbestimmten Winkel (α) verschoben sind, der jeweils zwischen den Winkelbezugsmitteln (4) und einer Projektion von zwei aus der Drehachse (X - X) senkrecht austretenden bzw. die Positionierungsmittel (11a, 12a) durchquerenden Geraden (S₁, S₂) auf einer senkrecht zur Drehachse (X - X) liegenden Ebene (ω), gemessen wird.

3. Eine Methode zur Montage und Positionierung eines Elektromotors (1) in einem Motorsitz (5), wobei
der Elektromotor (1) eine Antriebswelle (3) umfasst, die aus den beiden Kopfstellen des Motors (1) entlang einer Drehlängsachse (X - X) herausragt, sowie zwei Abschnitte (11, 12), die aus den zwei Kopfstellen des Motors (1) entlang der Drehlängsachse (X - X) herausragen,
der Motorsitz (5) zwei Aussparungen (9, 10) besitzt, um die zwei Abschnitte (11, 12) des Motors (1) aufzunehmen,
die Abschnitte (11,12) Positionierungsmittel (11a, 12a) umfassen,
die zwei Aussparungen (9, 10) des Motorsitzes (5) anpassende Positionierungsmittel (9a, 10a) umfassen, die derart ausgebildet sind, dass sie eine Verriegelungskupplung mit den Positionierungsmitteln (11a, 12a) des Motors (1) bilden,
der Motor (1) einen außermittigen Massenmittelpunkt (B) im Verhältnis zur Antriebswelle (3) besitzt,
wobei die Methode folgende Schritte umfasst:
- Stützung des Motors (1) mit der Antriebswelle (3), damit der Motor (1) sich ungehindert um die Antriebswelle (3) aufgrund der Schwerkraft drehen kann,
- Drehung des Motors (1) um die Antriebswelle (3) durch einen Ausgleichswinkel (γ), welcher vom kleineren Winkel (ω) abhängt, der jeweils zwischen dem Massenmittelpunkt (B) und einer Projektion von zwei aus der Drehachse (X - X) senkrecht austretenden bzw. die Positionierungsmittel (11a, 12a) des Motors (1) durchquerenden Geraden (S₁, S_{B}) auf einer senkrecht zur Drehachse (X - X) liegenden Ebene (Σ) derart gegeben wird, dass die Positionierungsmittel (11a, 12a) des Motors (1) in eine Winkelstellung gebracht werden, damit sie durch eine Verriegelung mit den anpassenden Positionierungsmitteln (9a, 10a) verbunden werden können, wenn der Motor (1) in den Sitz (5) montiert wird,
- Montage des Motors (1) in den Sitz (5), um die Verriegelungskupplung zu verwirklichen.

4. Eine Methode zur Montage und Positionierung eines Elektromotors (1) in einen Motorsitz (5) nach Anspruch 3, wobei der außermittige Massenmittelpunkt (B) Winkelbezugsmittel (4) umfasst, die aus dem Motor (1) herausragen,
- die Positionierungsmittel (11a, 12a) des Motors (1) sowie die Winkelbezugsmittel (4) sind durch einen vorbestimmten Verschiebungswinkel (α) verschoben, der jeweils zwischen dem Winkelbezugsmittel (4) und einer Projektion von zwei aus der Drehachse (X - X) senkrecht austretenden bzw. die Positionierungsmittel (11a, 12a) des Motors (1) durchquerenden Geraden (S₁, S₂) auf einer senkrecht zur Drehachse (X - X) liegenden Ebene (Σ) gemessen wird,
wobei die Methode folgende Schritte umfasst:
- Stützung des Motors (1) mit der Antriebswelle (3), damit der Motor (1) sich um die Antriebswelle (3) aufgrund der Schwerkraft drehen kann, wobei die Drehung derart ausgebildet ist, dass die Winkelbezugsmittel (4) gegen ein Winkelanschlagmittel (35) stoßen, das sich an einem vorbestimmten Anschlagswinkel (β) im Verhältnis zur Geraden (S_{y}) befindet, welche senkrecht von der Drehachse (X - X) abwärts verläuft,
- Drehung des Motors (1) um die Antriebswelle (3) durch einen Ausgleichswinkel (γ), welcher vom vorbestimmten verschobenen Winkel (α) sowie vom vorbestimmten Anschlagswinkel (β) abhängt, um die Positionierungsmittel (11a, 12a) des Motors (1) in eine Winkelstellung zu bringen, damit sie durch eine Verriegelungskupplung mit den anpassenden Positionierungsmitteln (9a, 10a) verbunden werden können, wenn der Motor (1) in den Sitz (5) montiert wird ,
- Montage des Motors (1) im Sitz (5), um die Verriegelungskupplung zu verwirklichen.

5. Eine Methode zur Montage und Positionierung eines Elektromotors (1) nach Anspruch 4, wobei die Winkelbezugsmittel (4) aus einem elektrischen Kondensator bestehen.

6. Eine Methode zur Montage und Positionierung eines Elektromotors (1) nach Anspruch 4 oder 5, wobei der Ausgleichswinkel (γ) gleich dem vorbestimmten Verschiebungswinkel (α) abzüglich des vorbestimmten Bezugswinkels (β) ist.

## Revendications

1. Moteur électrique (1) avec un siège de moteur (5), le moteur électrique (1) étant conçu pour qu'il soit monté et positionné dans le siège de moteur (5) susdit, le moteur électrique (1) susdit comportant un arbre de transmission (3) saillant des deux extrémités frontales du moteur (1) susdit le long d'un axe de rotation longitudinal (X-X) et de deux portions (11,12) saillant des deux extrémités frontales susdites du moteur (1) susdit le long de l'axe de rotation longitudinal (X-X) susdit, le siège de moteur (5) susdit ayant deux niches (9,10) aptes à recevoir les deux portions (11,12) susdites du moteur (1),
**caractérisé en ce que**
- le deux portions (11,12) susdites du moteur (1) comportent des moyens de positionnement (11a,12a),
- les deux niches (9,10) susdites du siège de moteur (5) comportent des moyens de positionnement complémentaires (9a,10a) conçus pour garantir un couplage par verrouillage avec les moyens de positionnement (11a,12a) susdits du moteur (1),
- que le moteur (1) susdit a un centre de gravité excentré (B) par rapport à l'arbre de transmission (3),et
- que les moyens de positionnement (11a,12a) susdits du moteur (1) sont décalés angulairement par rapport au centre de gravité excentré (B) susdit par un angle prédéterminé (ω) mesuré entre la projection sur un plan (Σ), normal par rapport à l'axe de rotation (X-X) de deux lignes droites (S₁, S_{B}) qui quittent l'axe de rotation (X-X) perpendiculairement et qui passent respectivement par les moyens de positionnement (11a,12a) susdits et le centre de gravité excentré (B) susdit.

2. Moteur électrique (1) selon la revendication 1, comportant un moyen de repère angulaire (4) saillant du moteur susdit, **caractérisé en ce que** les moyens de positionnement (12a,11a) susdits du moteur susdit et le moyen de repère angulaire (4) susdit sont décalés angulairement par un angle de décalage prédéterminé (α) mesuré entre la projection sur un plan (ω), normal par rapport à l'axe de rotation (X-X) de deux lignes droites (S₁, S₂) qui quittent l'axe de rotation (X-X) perpendiculairement et qui passent respectivement par les moyens de positionnement (11a,12a) susdits et le moyen de repère angulaire (4) susdit.

3. Procédé de montage et positionnement d'un moteur électrique (1) dans un siège de moteur (5), **caractérisé en ce que**
le moteur électrique (1) susdit comporte un arbre de transmission (3) saillant des deux extrémités frontales du moteur (1) susdit le long d'un axe de rotation longitudinal (X-X) et de deux portions (11,12) saillant des deux extrémités frontales susdites du moteur (1) susdit le long de l'axe de rotation longitudinal (X-X) susdit,
que le siège de moteur (5) susdit a deux niches (9,10) aptes à recevoir les deux portions (11,12) susdites du moteur (1) susdit,
que les deux portions (11,12) susdites comportent des moyens de positionnement (11a,12a),
que les deux niches (9,10) susdites du siège de moteur (5) comportent des moyens de positionnement complémentaires (9a,10a) conçus pour garantir un couplage par verrouillage avec les moyens de positionnement (11a,12a) susdits du moteur (1),
que le moteur (1) susdit a un centre de gravité excentré (B) par rapport à l'arbre de transmission (3),
le procédé susdit comportant les étapes de:
- soutien du moteur (1) susdit par l'arbre de transmission (3) susdit pour permettre au moteur (1) de tourner librement autour de l'arbre de transmission (3) par gravité,
- rotation du moteur (1) susdit autour de l'arbre de transmission (3) susdit par un angle de compensation (γ) qui dépend de l'angle plus petit (ω) identifié entre les projections sur un plan (Σ) normal par rapport à l'axe de rotation (X-X) de deux lignes droites (S₁,S_{B}) qui quittent l'axe de rotation (X-X) perpendiculairement et qui passent respectivement par les moyens de positionnement (11a,12a) susdits du moteur (1) et le centre de gravité (B) susdit de façon à porter les moyens de positionnement (11a,12a) du moteur (1) dans une position angulaire leur permettant d'être reliés d'une manière verrouillée aux moyens de positionnement complémentaires (9a,10a) aussitôt que le moteur (1) soit monté dans le siège (5) susdit,
- montage du moteur (1) susdit dans le siège (5) susdit de façon à réaliser le couplage par verrouillage susdit.

4. Procédé de montage et positionnement d'un moteur électrique (1) dans un siège de moteur (5) selon la revendication 3, **caractérisé en ce que** le centre de gravité excentré (B) susdit comporte un moyen de repère angulaire (4) saillant du moteur (1) susdit, que
- les moyens de positionnement (11a,12a) susdits du moteur (1) susdit et le moyen de repère angulaire (4) susdit sont décalés angulairement par un angle de décalage prédéterminé (α) mesuré entre la projection sur un plan (Σ) normal par rapport à l'axe de rotation (X-X) de deux lignes droites (S₁, S₂) qui quittent l'axe de rotation (X-X) perpendiculairement et qui passent respectivement par les moyens de positionnement (11a,12a) susdits et le moyen de repère angulaire (4) susdit,
le procédé susdit comportant les étapes de :
- soutien du moteur (1) susdit par l'arbre de transmission (3) susdit pour permettre au moteur (1) de tourner autour de l'arbre de transmission (3) par gravité, la rotation susdite étant conçue pour entraîner le moyen de repère angulaire (4) à buter contre les moyens d'arrêt angulaires (35) agencés à un angle d'arrêt prédéterminé (β) par rapport à une ligne droite (S_{γ}) qui court verticalement vers le bas depuis l'axe de rotation (X-X),
- rotation du moteur (1) susdit autour de l'arbre de transmission (3) susdit par un angle de compensation (γ) qui dépend de l'angle de décalage prédéterminé (α) susdit et de l'angle d'arrêt prédéterminé (β) susdit, de façon à porter les moyens de positionnement (11a,12a) du moteur (1) dans une position angulaire permettant le couplage par verrouillage avec les moyens de positionnement complémentaires (9a,10a) aussitôt que le moteur (1) soit monté dans le siège (5) susdit,
- montage du moteur (1) susdit dans le siège (5) susdit de façon à réaliser le couplage par verrouillage susdit.

5. Procédé de montage et positionnement d'un moteur électrique (1) selon la revendication 4, **caractérisé en ce que** le moyen de repère angulaire (4) susdit est un condensateur électrique.

6. Procédé de montage et positionnement d'un moteur électrique (1) selon la revendication 4 ou 5, **caractérisé en ce que** l'angle de compensation (γ) susdit est égal à l'angle de décalage prédéterminé (α) susdit moins l'angle de repère prédéterminé (β) susdit.
